# EUROPÄISCHE PATENTSCHRIFT

(11) **EP 0 410 488 B1**
(45) Veröffentlichungstag und Bekanntmachung des Hinweises auf die Patenterteilung: **16.02.1994**
(21) Anmeldenummer: 90114504.5
(22) Anmeldetag: 27.07.1990
(51) Int. Cl.: H02K 7/116

(54) **Antriebseinheit mit einem Elektromotor**
Drive unit with an electric motor
Ensemble d'entraînement avec un moteur électrique

(30) Priorität: 28.07.1989 DE 8909181 U
(43) Veröffentlichungstag der Anmeldung: 30.01.1991
(73) Patentinhaber: Mösslacher, Hannes, D-81249 München (DE)
(72) Erfinder: Mösslacher, Hannes, D-81249 München (DE)
(74) Vertreter: Viering, Jentschura & Partner

(56) Entgegenhaltungen:
- EP-A- 0 298 403
- FR-A- 2 040 907
- FR-A- 2 133 100
- US-A- 3 836 290
- PATENT ABSTRACTS OF JAPAN vol. 10, no. 95 (E-395)(2152) 12 April 1986, & JP-A-60 237845 (MATSUSHITA) 26 November 1985,

## Beschreibung

Die Erfindung betrifft eine Antriebseinheit mit einem Elektromotor, der einen als Polrohr mit zylindrischer Mantelfläche ausgebildeten Stator und einen darin befindlichen Rotor aufweist, und einen mit dem Elektromotor verbundenes Getriebe aufweist.

Antriebseinheiten mit einem Elektromotor und einem daran angeflanschten Getriebe finden in der Technik ein breites Anwendungsgebiet. Da in den meisten Fällen bei gegebener Leistung das Drehmoment eines Elektromotors gering ist und die Drehzahl hoch ist, ist ein nachgeschaltetes Übersetzungsgetriebe erforderlich.

Ein üblicher Elektromotor besteht im wesentlichen aus einem Rotor und einem Stator. Der Stator enthält elektrische Spulen oder Permanentmagnete, die in der Regel an dem Motorgehäuse festgelegt sind. Der Rotor weist in der Regel formschlüssig mit einer Motorwelle verbundene und aneinandergereihte Ankerbleche auf, wobei von den aneinandergereihten Ankerblechen Nuten ausgebildet werden, längs denen die Ankerwicklungen verlaufen.

Kleinere Antriebseinheiten finden häufig als Stellantriebe innerhalb größerer Maschinen oder im Kraftfahrzeugen oder dergleichen Anwendung, beispielsweise für das Öffnen und Schließen von Schiebedächern. Dabei besteht das Motorgehäuse aus einem Polrohr mit an dessen Innenseite angebrachten Permanentmagnetpolen.

Eine Antriebseinheit der eingangs erwähnten Art ist aus der EP-A-0 298 403 bekannt. Diese Antriebseinheit ist in Modulbauweise gefertigt, wobei an einen in einem Polrohr befindlichen Elektromotor stirnseitig und sich axial erstreckend ein Getriebe angeflanscht ist.

Anhand einer Antriebseinheit gemäß der FR-A-2040907 mit einem kugelförmigen, in alle Richtungen drehbaren, hydrodynamisch oder hydropneumatisch gelagerten Rotor ist auch ein radialer Getriebeabtrieb bekannt. Der Getriebeabtrieb gemäß diesem Dokument kann nicht anders als radial erfolgen, da die freie Drehbarkeit des Rotors in alle Richtungen gewährleistet sein soll und somit keine ortsfeste Achse des Rotors vorhanden sein kann.

Insbesondere bei Stellantrieben der eingangs erwähnten Art mit zylindrischem Polrohr treten häufig Konstruktions-, Montage- und Wartungsprobleme aufgrund von geringem zur Verfügung stehendem Bauraum auf. Üblicherweise ist das Getriebe an dem Polrohr an dessen Stirnseite angeflanscht, wobei die Motorwelle aus dem Motorgehäuse heraus in das Getriebe geführt ist. Bei diesen herkömmlichen Antriebseinheiten ergibt sich eine große Baulänge. Neben der großen Baulänge ist darüberhinaus keine Flexibilität in der Wahl des Anbringungsortes des Getriebes an dem Motor gegeben. Dadurch liegt indirekt auch die Stelle des Abtriebs des Getriebes fest, abgesehen von kleinen Unterschieden, die aus der Getriebekonstruktion resultieren. Dies führt zu weiteren unerwünschten Vorgaben für die Gestaltung des anzutreibenden Mechanismus, beispielsweise des Stellmechanismus oder des Mechanismus zum Öffnen und Schließen eines Schiebedaches.

Häufig wird ein Stirnradgetriebe auf eine aus dem Motor austretende Motorwelle mit einem geeigneten Mitnehmer, wie beispielsweise einer Paßfeder, aufgesteckt, jedoch muß dazu eine enge Toleranz für die Rechtwinkeligkeit zwischen Motorwelle und Anflanschfläche eingehalten werden. Im Gegensatz zu einem Stirnradgetriebe muß ein ebenfalls gebräuchliches Schneckengetriebe mit einer auf die Motorwelle aufgesteckten Schnecke meist so mit dem Motor verbunden werden, daß der entsprechende Deckel des Motors integraler Bestandteil des Getriebegehäuses ist und die Motorwelle darin gelagert ist. Diese Notwendigkeit ergibt sich daraus, daß bei einem Schneckengetriebe über die enge Rechtwinkeligkeitstoleranz hinaus nur sehr enge Toleranzen für den Abstand zwischen Stirnradachse und Schnecke zulässig sind. Für eine Antriebseinheit mit einem Schneckengetriebe ergibt sich daher nicht nur eine aufwendigere Getriebekonstruktion, sondern auch der Nachteil, daß Baukastensysteme, d.h. das wahlweise Zusammenstellen unterschiedlicher Getriebe mit gleichen Motoren und umgekehrt, bei üblichen Antriebseinheiten schwierig zu verwirklichen sind, da jeweils Motor und Getriebe genau aufeinander abgestimmt sein müssen, da das Getriebe als Motordeckel mit dem darin festgelegten Lager zugleich einen Teil des Motors bildet. Darüberhinaus muß bei derartigen Antriebseinheiten zum Wechseln des Getriebes auch das Motorlager demontiert werden.

Die Erfindung löst die Aufgabe, eine gattungsgemäße Antriebseinheit zu schaffen, die bei kleiner Baulänge und einfacher Konstruktion eine hohe Flexibilität im Anbringen des Getriebes an dem Motor gewährleistet.

Diese Aufgabe wird dadurch gelöst, daß der Motorabtrieb als ein den Rotorumfang umschließendes und mit diesem kraft- oder formschlüssig verbundenes Getriebeglied ausgebildet ist und das Getriebe radial an die zylindrische Mantelfläche des Polrohrs angeflanscht ist.

Die erfindungsgemäße Antriebseinheit hat damit in mehrfacher Hinsicht Vorteile gegenüber herkömmlichen Antriebseinheiten. So kann das Getriebe an jeder Stelle entlang der gesamten Baulänge des Motors angeflanscht werden, wobei die Baulänge der gesamten Antriebseinheit immer die gleiche bleibt. Damit ergibt sich die Möglichkeit, den Getriebeabtrieb und damit die Verbindungsstelle zwischen anzutreibendem Mechanismus und Antriebseinheit an eine gewünschte Stelle zu verlegen, wodurch sich die Einbauflexibilität der Antriebseinheit erhöht.

Baukastensysteme sind mit der erfindungsgemäßen Antriebseinheit auch bei Schneckengetrieben einfach möglich, da das Getriebegehäuse nicht zugleich als integraler Bestandteil des Motors dienen muß, d.h. als Deckel in dem üblicherweise ein Motorlager festgelegt sein muß.

Wenn der Abtrieb über das Getriebeglied etwa in Motorlängsmitte erfolgt, erhält man zusätzlich eine wünschenswert kleine Torsionslänge der Motorwelle, da im Vergleich zu derzeit gebräuchlichen, einen Abtrieb am Motorwellenende aufweisenden Antriebseinheiten nur noch halb so viel Torsionslänge erforderlich ist und die Motorwelle der erfindungsgemäßen Antriebseinheit damit eine doppelt so steife Torsionsstabfeder darstellt.

Das Getriebeglied kann vorzugsweise, insbesondere bei Anwendung der Antriebseinheit als Stellantrieb wegen der geforderten hohen Übersetzung, aus einer auf den Rotor aufgesteckten Schnecke mit einem dem Außendurchmesser des Rotors entsprechenden Innendurchmesser bestehen, welcher zapfenförmige oder andere Fortsätze aufweist, die in die Ankernuten eingreifen und so die Schnecke mit dem Rotor formschlüssig verbinden. Für andere Anwendungen kann ein Stirnrad oder eine Riemenscheibe als Getriebeglied sinnvoll sein.

Als weiterer Vorteil der erfindungsgemäßen Antriebseinheit kann das Polrohr durchgehend ausgebildet sein und an seinen beiden Enden von zwei gleichen Deckeln verschlossen werden. Damit befinden sich alle Teile des Elektromotors in dem an beiden Enden von zwei Deckeln verschlossenen Polrohr und die Motorwelle dringt nicht aus dem Motorgehäuse heraus, wodurch sich ohne großen Aufwand hohe Schutzartklassen, beispielsweise IP 66, erreichen lassen.

Die Motorwelle kann dabei vorzugsweise an ihren beiden Enden jeweils mittels eines in den Deckel eingefaßten Kalottenlagers gelagert sein. Die beiden Deckel und entsprechend die beiden darin eingefaßten Kalottenlager können der Einfachheit halber identisch sein. Durch die Kalottenlager werden Winkelfehler ausgeglichen, wodurch weniger genaue Fertigungstoleranzen ermöglicht werden. Das bei derzeit bekannten Antriebseinheiten erforderliche Einhalten einer engen Fertigungstoleranz für die Rechtwinkeligkeit zwischen Motorwelle und einer Anflanschfläche entfällt völlig, da die Motorwelle nicht aus dem Motorgehäuse heraustritt und kein Getriebe als Anschlußteil auf die Motorwelle aufgesteckt wird.

Vorzugsweise ist das Getriebe der erfindungsgemäßen Antriebseinheit mit einem entsprechend der zylindrischen Mantelfläche des Polrohrs gekrümmtem Getriebeflansch versehen, welcher an dem Polrohr mittels einer dessen Mantelfläche umgreifenden Schnellbefestigungsvorrichtung angeflanscht ist. Durch diese Schnellbefestigungsvorrichtung läßt sich im Falle eines Baukastensytems ein einfaches Montieren unterschiedlicher Getriebe an den gleichen Motortyp und umgekehrt verwirklichen. Es sind jedoch auch andere Befestigungsarten möglich. So kann an dem Polrohr ein Zentrierrand angeformt sein, auf welchen das Getriebe mit entsprechender unterer Gehäuseöffnung aufgesteckt wird. Da das Getriebe in der Regel flach ist, empfiehlt sich nicht nur ein kreisrunder, sondern alternativ auch ein rechteckförmiger Zentrierrand und eine entsprechende reckteckförmige Getriebegehäuseöffnung. Fixiert werden kann das Getriebe dann mittels in das Getriebegehäuse eingeschraubter und an dem Zentrierrand angreifender Madenschrauben oder durch Anformen von jeweils mit einer Gewindebohrung versehenen Augen am Zentrierrand, wobei in diesem Fall an dem Getriebegehäuse nur Durchgangsbohrungen vorzusehen sind. Als weitere Befestigungsart kann beispielsweise an dem Polrohr ein größeres Auge mit einer rechteckigen oder runden Fläche angeformt sein, auf welche der in diesem Fall ebenfalls ebene Flansch des Getriebegehäuses aufgesetzt und festgeschraubt werden kann. Der Flansch ist dann mit Durchgangsbohrungen und das Auge längs seines Randes mit entsprechenden Gewindebohrungen versehen. Zur leichteren und genaueren Montage kann bei dieser Befestigungsart zusätzlich ein Zentrierrand an dem Auge angeformt sein, wobei durch diesen Zentrierrand neben der Montageerleichterung zusätzlich ein Formschluß zwischen Getriebegehäuse und Polrohr erreicht wird, der ein seitliches Verrücken des Getriebes verhindert.

Die Erfindung wird nachfolgend anhand eines bevorzugten Ausführungsbeispiels unter Bezugnahme auf die Zeichnung näher erläutert.

In der Zeichnung zeigen:

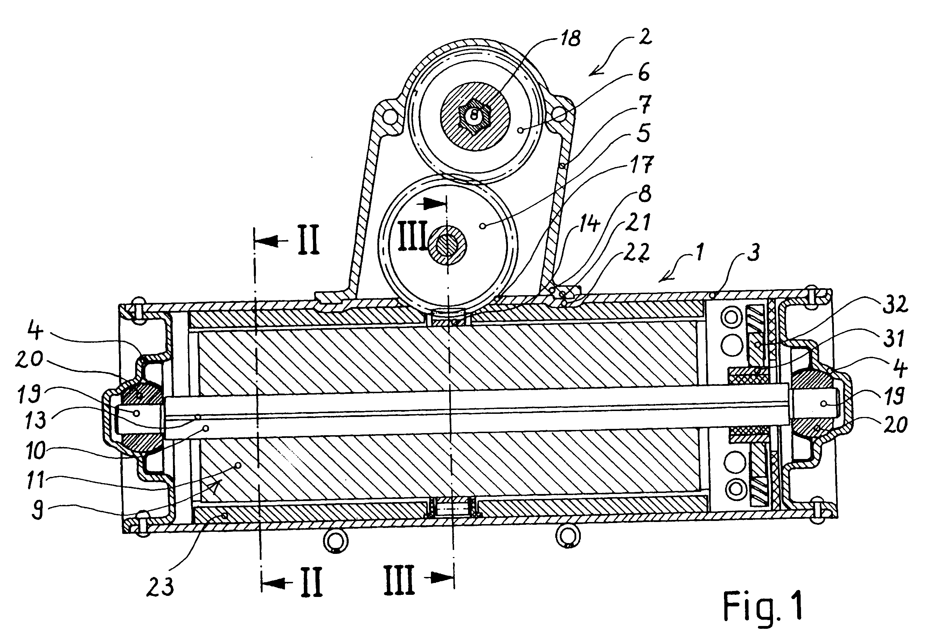

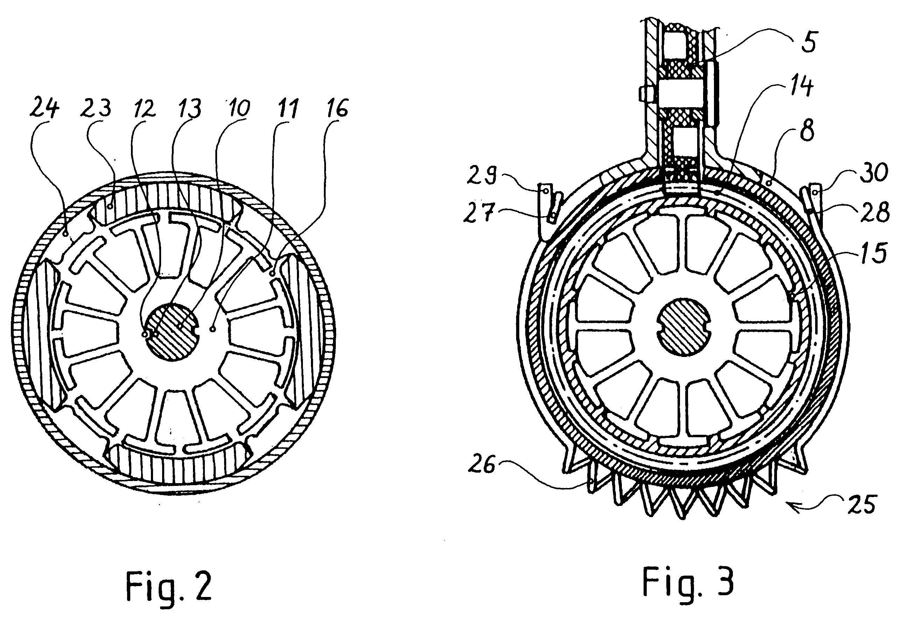

Fig. 1 einen Längsschnitt durch eine erfindungsgemäße Antriebseinheit; Fig. 2 einen Schnitt entlang der Linie II-II in Fig.1; und Fig. 3 einen Schnitt entlang Linie III-III in Fig. 1.

Die in Fig. 1 im Längsschnitt dargestellte Antriebseinheit besteht aus einem Elektromotor 1 und einem Getriebe 2. Das Gehäuse des Elektromotors 1 besteht im wesentlichen aus dem nahtlosen, gezogenen, gewalzten oder gegossenen Polrohr 3 und den die Stirnseiten des Polrohrs 3 verschließenden gleichen Deckeln 4, welche als Preßteile hergestellt sind. Die Zahnräder 5 und 6 sind in einem gegossenen Getriebegehäuse 7 untergebracht, welches radial mit seinem der zylindrischen Oberfläche des Polrohrs folgenden Flansch 8 an den Elektromotor 1 angeflanscht ist, wie in Fig. 3 zu erkennen ist. Der Flansch 8 ist mit Vorsprüngen 21 versehen, welche in längs des Umfangs des Polrohrs 3 eingeprägte Nuten 22 eingreifen.

Wie aus Fig. 3 ersichtlich, wird der Flansch 8 mittels der Schnellbefestigungsvorrichtung 25 fest gegen die zylindrische Mantelfläche des Polrohrs 3 gepreßt. Die Schnellbefestigungsvorrichtung 25 besteht aus einer Zugfeder 26, die mit ihren Endabschnitten 27 bzw. 28 in am Rand des Flansches 8 befindliche Haken 29 bzw. 30 eingehakt sind.

Der Rotor 9 besteht im wesentlichen aus der Motorwelle 10 und den zu einem Paket aneinandergereihten Ankerbleche 11, die mit ihren Nasen 12 in Längsnuten 13 in die Motorwelle 10 formschlüssig eingreifen. Gelagert ist der Rotor 9 über an den beiden Enden der Motorwelle 10 angedrehte gleiche Lagerzapfen 19, auf welche die Kalottenlager 20 aufgesteckt sind, die ihrerseits mit ihrem Außenumfang jeweils an dem Deckel 4 festgelegt sind.

Mit dem Rotor 9 ist die Schnecke 14 formschlüssig mittels zapfenförmiger, sich radial nach innen erstreckender Fortsätze 15 verbunden, die in die Ankernuten 16 eingreifen, wie aus den Fig. 2 und 3 zu erkennen ist. Die Schnecke 14 kämmt durch einen in das Polrohr 3 eingefrästen Schlitz 17 hindurch mit dem Schneckenrad 5, welches seinerseits mit dem Getriebezahnrad 6 kämmt, dessen Welle 18 den Abtrieb des Getriebes 2 und damit der gesamten Antriebseinheit bildet.

Der Stator des Elektromotors wird im wesentlichen von mehreren Permanentmagneten 23 gebildet, welche von in das Polrohr 3 eingeprägten Nuten 22 und Federn 24 gehalten werden, was aus Fig. 1 und 2 ersichtlich ist.

Damit befinden sich alle Funktionseinheiten des Elektromotors 1 einschließlich des Kommutators 31 und der Kohlebürsten 32 in dem aus dem Polrohr 3 und den Deckeln 4 gebildeten Motorgehäuse und die Motorwelle 10 dringt nicht aus dem Motorgehäuse hinaus, da sich der durch die Schnecke 14 gebildete Abtrieb des Elektromotors 1 ebenfalls in dem Motorgehäuse befindet.

Darüberhinaus können auch noch beiderseits oder einseitig neben der Schnecke 14 angebrachte Lagerringe ein Ausweichen der Schnecke und damit der Rotorachse unter hoher Belastung verhindern.

## Patentansprüche

1. Antriebseinheit mit einem Elektromotor, der einen als Polrohr mit zylindrischer Mantelfläche ausgebildeten Stator und einen darin befindlichen Rotor aufweist, und einem mit dem Elektromotor verbundenen Getriebe, dadurch gekennzeichnet, daß der Motorabtrieb als ein den Rotorumfang umschließendes und mit diesem kraft- oder formschlüssig verbundenes Getriebeglied (14) ausgebildet ist und das Getriebe (2) radial an die zylindrische Mantelfläche des Polrohrs (3) angeflanscht ist.

2. Antriebseinheit nach Anspruch 1, dadurch gekennzeichnet, daß das den Rotor (9) umschließende Getriebeglied (14) eine Schnecke (14) ist.

3. Antriebseinheit nach Anspruch 1, dadurch gekennzeichnet, daß das den Rotor (9) umschließende Getriebeglied (14) ein Stirnrad ist.

4. Antriebseinheit nach Anspruch 1, dadurch gekennzeichnet, daß das den Rotor (9) umschließende Getriebeglied (14) eine Riemenscheibe ist.

5. Antriebseinheit nach einem der Ansprüche 1 bis 4, dadurch gekennzeichnet, daß alle Teile des Elektromotors (1) sich in dem an beiden Enden von zwei Deckeln (4) verschlossenen Polrohr (3) befinden.

6. Antriebseinheit nach Anspruch 5, dadurch gekennzeichnet, daß die Motorwelle (10) an ihren beiden Enden jeweils mittels eines in den Deckel (4) eingefaßten Kalottenlagers (20) gelagert ist.

7. Antriebseinheit nach Anspruch 5, dadurch gekennzeichnet, daß die beiden Deckel (4) und entsprechend die beiden darin eingefaßten Kalottenlager (20) identisch sind.

8. Antriebseinheit nach einem der Ansprüche 1 bis 7, dadurch gekennzeichnet, daß das Getriebe (2) einen entsprechend der zylindrischen Mantelfläche des Polrohrs (3) gekrümmten Getriebeflansch (8) aufweist, welcher an dem Polrohr (3) mittels einer dessen Mantelfläche umgreifenden Schnellbefestigungsvorrichtung (25) an das Polrohr (3) angeflanscht ist.

## Claims

1. Drive unit comprising an electric motor, wherein the electric motor has a stator formed as a pole tube with cylindrical shell surface and a rotor arranged therein, and a gear connected to the electric motor, characterized in that the motor output is formed as a gear member (14) surrounding the rotor periphery and connected thereto by friction or form closure, and the gear (2) is radially flanged to the cylindrical shell surface of the pole tube (3).

2. Drive unit according to claim 1, characterized in that the gear member (14) surrounding the rotor (9) is a worm (14).

3. Drive unit according to claim 1, characterized in that the gear member (14) surrounding the rotor (9) is a spur wheel.

4. Drive unit according to claim 1, characterized in that the gear member (14) surrounding the rotor (9) is a pulley.

5. Drive unit according to any of claims 1 to 4, characterized in that all parts of the electric motor (1) are disposed in the pole tube (3) closed at both ends by two respective caps (4).

6. Drive unit according to claim 5, characterized in that the motor shaft (10) is journalled at both ends by respective callote bearings (20) mounted in the caps (4).

7. Drive unit according to claim 5, characterized in that the two caps (4) and thus also the two calotte bearings (20) mounted therein are identical.

8. Drive unit according to any of claims 1 to 7, characterized in that the gear (2) comprises a gear flange (8) curved in conformity with the cylindrical shell surface of the pole tube (3) and flanged to the pole tube (3) by means of a quick-mounting apparatus (25) encompassing the circumference of the pole tube (3).

## Revendications

1. Ensemble d'entraînement comprennant un motor électrique, tel que le moteur montre un stator formé d'un tube polaire avec surface cylindrique et un rouage assemblé avec le moteur électrique, characterisé en ce que le démultiplicateur du moteur s'est forme comme membre du rouage (14) entourrant la périphérie du rotor et assemblé avec laquelle par fermeture de friction ou de forme, et que le rouage (2) est bridé radialement à la surface cylindrique du tube polaire (3).

2. Ensemble d'entraînement selon la revendication 1, characterisé en ce que le membre du rouage (14) entourrant le rotor (9) constitue une vis sans fin.

3. Ensemble d'entraînement selon la revendication 1, characterisé en ce que le membre du rouage (14) entourrant le rotor (9) constitue un pignon de distribution.

4. Ensemble d'entraînement selon la revendication 1, characterisé en ce que le membre du rouage (14) entourrant le rotor (9) constitue une poulie.

5. Ensemble d'entraînement selon quelconque des revendications 1 à 4, characterisé en ce que toutes les parts du moteur électrique (1) se trouvent dans le tube polaire (3) lequel est fermé des deux bouts par deux chapeaux (4).

6. Ensemble d'entraînement selon la revendication 5, characterisé en ce que l'arbre à moteur (10) est monté en palier aux ses deux bouts au moyen d'un palier calotte intégré au chapeau (4).

7. Ensemble d'entraînement selon la revendication 5, characterisé en ce que les deux chapeaux (4) sont identiques aux deux paliers calotte correspondents (20) intégrés aux chapeaux.

8. Ensemble d'entraînement selon quelconque des revendications 1 à 7, characterisé en ce que le rouage (2) montre une bride à rouage (8) courbée conformement à la surface cylindrique du tube polaire (3), telle que la bride est bridée au tube polaire (3) par dispositif de fixation rapide (25) entourrant la surface du tube polaire (3).
